Europäisches Patentamt

European Patent Office

Office européen des brevets

(19)

(11) Veröffentlichungsnummer: **0 425 758 A1**

## (12) EUROPÄISCHE PATENTANMELDUNG

(21) Anmeldenummer: 90110341.6

(22) Anmeldetag: 31.05.90

(51) Int. Cl.⁵: **H01R 13/52**, H01R 13/625, H01R 13/639

(30) Priorität: 29.09.89 DE 8911625 U

(43) Veröffentlichungstag der Anmeldung:
08.05.91 Patentblatt 91/19

(84) Benannte Vertragsstaaten:
AT BE CH DE DK ES FR GB GR IT LI LU NL SE

(71) Anmelder: ERICH JAEGER GMBH & CO. KG
Gluckensteinweg 5a
W-6380 Bad Homburg v.d.H. 1(DE)

(72) Erfinder: Nussbaumer, Horst
Adlerflychtstr. 39
W-6000 Frankfurt/Main 1(DE)

(74) Vertreter: Keil, Rainer A., Dipl.-Phys. Dr. et al
KEIL & SCHAAFHAUSEN Patentanwälte
Eysseneckstrasse 31
W-6000 Frankfurt am Main 1(DE)

(54) Einrichtung zum elektrischen Anschliessen der Steckdose einer mehrpoligen Steckvorrichtung.

(57) Die Erfindung bezieht sich auf eine Einrichtung zum elektrischen Anschließen der Steckdose einer mehrpoligen Steckvorrichtung, insbesondere für Kraftfahrzeuge, bei welcher die Steckdose (1) dichtend an der Vorderseite (V) eines Halteteils (2) anliegend an diesem befestigt und an einen irt dem Dosengehäuse (3) aufgenommenen Kontaktträgereinsatz ein Anschlußstecker (5) ansteckbar ist, wobei zur Herstellung einer schnellen Steckverbindung und Vermeidung von Feuchtigkeitseintritt eine Verschlußkappe (6) vorgesehen ist, welche dichtend an der Rückseite des Halteteils (2) anliegend eine Öffnung (7) des Halteteils (2) von der Rückseite (R) aus durchgreift und mittels wenigstens eines Verriegelungselements (8) relativ zu dem Halteteil (2) axial festlegbar ist.

Teilschnitt A - A um 38° verdreht gezeichnet

FIG. 1a

# EINRICHTUNG ZUM ELEKTRISCHEN ANSCHLIESSEN DER STECKDOSE EINER MEHRPOLIGEN STECK-VORRICHTUNG

Die Erfindung bezieht sich auf eine Einrichtung zum elektrischen Anschließen der Steckdose einer mehrpoligen Steckvorrichtung, insbesondere für Kraftfahrzeuge, bei welcher die Steckdose dichtend an der Vorderseite eines Halteteils anliegend an diesem befestigt und an einen in dem Dosengehäuse aufgenommenen Kontaktträgereinsatz ein Anschlußstecker aufsteckbar ist.

Das Anschließen des Kabels ist derzeit recht aufwendig, insbesondere wenn die Steckdose, welche elektrisch angeschlossen werden kann, an verhältnismäßig unzugänglicher Stelle eines Kraftfahrzeugs sitzt. Die einzelnen Litzen des Anschlußkabels müssen an Ort und Stelle mit den zahlreichen Anschlußkontakten verbunden werden. Außerdem bereitet, was bei Kraftfahrzeugen wichtig ist, die Abdichtung gegen Spritzwasser Schwierigkeiten, selbst wenn man einen die Herstellung der Anschlußverbindung erleichternden Anschlußstecker verwendet.

Aufgabe der Erfindung ist es, eine Einrichtung zum elektrischen Anschließen der Steckdose einer mehrpoligen Steckvorrichtung der eingangs genannten Art vorzuschlagen, welche schnell herstellbar und zuverlässig gegen das Eindringen von Feuchtigkeit abdichtbar ist.

Diese Aufgabe wird mit der Erfindung im wesentlichen gelöst durch eine Verschlußkappe, welche dichtend an der Rückseite des Halteteils anliegend eine Öffnung des Halteteils von der Rückseite aus durchgreift und mittels wenigstens eine Verriegelungssegments relativ zu dem Halteteil axial festlegbar ist.

Die Herstellung des elektrischen Anschlußes für die Steckdose ist damit schnell und zuverlässig auch an wenig zugänglichen Stellen möglich, da der Anschlußstecker zunächst mit dem Anschlußkabel verbunden und dann der Anschlußstecker ar den Kontaktträgereinsatz gesteckt werden kann. Gleichzeitig wird mit der Erfindung aber eine zuverlässige Abdichtung gegen Eindringen von Feuchtigkeit erreicht, da die Verschlußkappe zuverlässig abdichtend an dem Halteteil gehalten wird. Die Verschlußkappe kann dabei mit ihrem durch die Öffnung des Halteteils hindurchgreifenden Vorderabschnitt so ausgebildet sein, daß der Anschlußstecker im verriegelten Zustand der Verschlußkappe von dieser positioniert, d.h. in der voll an den Kontaktträgereinsatz gesteckten Stellung unverrückbar gehalten wird, so daß Kontaktschwierigkeiten vermieden sind. Die Verschlußkappe ist relativ zu der Steckdose, dem Kontaktträgereinsatz, dem Anschlußstecker und dem Halteteil drehbar.

Für eine zuverlässige axiale Festlegung der Verschlußkappe an dem Halteteil bei möglichst kleiner Öffnung in dem Halteteil sind die an dem die Öffnung des Halteteils durchgreifenden Vorderabschnitt der Verschlußkappe angebrachten Verriegelungssegmente in Einführungsdrehstellung der Verschlußkappe durch Segmentaussparungen am Rand der Öffnung des Halteteils axial hindurchführbar und durch Überführen der Verschlußkappe in ihre Verriegelungsstellung mit dem Halteteil verriegelbar.

Damit ein zuverlässiges Festspannen der Verschlußkappe an dem Halteteil möglich ist, wirken die Verriegelungssegmente beim Drehen der Verschlußkappe in die Verriegelungsstellung vorzugsweise mittels Auflaufschrägen mit der Vorderseite des Halteteils zusammen.

In diesem Zusammenhang ist es von Vorteil, wenn sich die Verschlußkappe über einen Dichtring aus elastisch nachgiebigem Material auf der Rückseite des Halteteils dichtend abstützt, da auf diese Weise das erforderliche Spiel für die Verriegelung der Verschlußkappe an dem Halteteil bei gleichzeitig sicherer Abdichtung gewährleistet ist.

Damit sich die Verschlußkappe zum Verriegeln einfach relativ zu dem Halteteil verdrehen läßt, ist bei einer weiteren Ausgestaltung der Erfindung zwischen Dichtring und Kappenkörper ein Gleitring angeordnet.

Ein weiteres Erfindungsmerkmal besteht darin, daß die Verschlußkappe an ihrem Umfang vorspringende Rastnocken aufweist, welche in Einführungsdrehstellung der Verschlußkappe in Nockeneinführungsaussparungen am Rand der Öffnung des Halteteils axial einführbar und durch Überführen der Verschlußkappe in ihre Verriegelungsdrehstellung in Nockenrastaussparungen am Rand der Öffnung des Halteteils einrastbar sind. Auf diese Weise kann mit einfachen Mitteln die Verriegelungsstellung der Verschlußkappe, in welcher sie auch den Anschlußstecker in der gewünschten Kontaktposition mit dem Kontaktträgereinsatz der Steckdose Positioniert; gesichert werden.

Um die Verschlußkappe in ihre Rast- und Verriegelungsstellung mit vertretbarem Kraftaufwand bringen und entsprechendem geringem Kraftaufwand auch wieder aus dieser lösen zu können, sind die Rastnocken, die Nockeneinführungsaussparungen und/oder die Nockenrastaussparungen an ihrem einander zugekehrten Flächen vorzugsweise abgerundet.

Die Raststellung kann bei Drehung der Verschlußkappe in ihre Verriegelungsstellung bei gleicher Sicherheit noch einfacher erreicht und auch wieder gelöst werden, wenn in weiterer Ausgestaltung der Erfindung die Rastnocken an einem radial elastisch nachgiebigen Wandbereich der Verschlußkappe angeordnet sind. Die Elastizität kann dabei beispielsweise durch eine Verringerung der Wandstärke erreicht werden, so daß die Verschlußkappe einstückig aus gleichem Material bestehen kann.

Bei einer weiteren Ausgestaltung der Erfindung sind die Nockeneinführungsaussparungen größer als die Nockenrastaussparungen. Hierdurch wird das axiale Einführen der Verschlußkappe in die Öffnung des Halteteils erleichtert, ohne aaß die Rastfunktion der Rastnocken beeinträchtigt wird.

Eine weitere Sicherung des Anschlußsteckers in seiner an den Kontaktträgereinsatz angesteckten Kontaktposition kann dadurch erfolgen, daß der Anschlußstecker beim Anstecken an den Kontaktträgereinsatz mit diesem axial verrastbar ist. In diesem Falle wird der Anschlußstecker also nicht alleine durch die Verschlußkappe positioniert und in seiner Kontaktstellung gesichert, obgleich letztere dies auch alleine kann.

Zum Zwecke der Verrastung kann in vorteilhafter Ausgestaltung der Erfindung der Anschlußstecker unter dem Ansteckdruck radial elastisch ausweichende Rasthaken aufweisen, welche bei vollständig an den Kontaktträgereinsatz angesteckten Anschlußstecker Rastkanten des Kontaktträgereinsatzes hintergreifen.

Das elastische Ausweichen kann beispielsweise dadurch gewährleistet sein, daß die Rasthaken über einen verhältnismäßig dünnen Materialsteg mit der Wandung des Anschlußsteckers verbunden sind, welcher die erforderliche Rückstellkraft zum Einrasten der Rasthaken hinter den Rastkanten gewährleistet.

Damit zum Austausch oder bei Reparatur der Anschlußstecker auch leicht wieder von der Rückseite der Steckdose abgezogen werden kann, weisen die Rasthaken vorzugsweise Betätigungsabschnitte auf, mit Hilfe welcher die Rasthaken bei radialer Krafteinwirkung aus ihrer Raststellung aushebbar sind. Die Betätigungsabschnitte bilden vorzugsweise eine Verlängerung der Rasthaken an deren öffnungsseitigen Ende jenseits des Verbindungssteges mit der Wandung des Anschlußsteckers. Drückt man von außen nach radial innen auf die Betätigungsabschnitte, so werden die Rasthaken über den als Gelenk wirkenden Materialsteg nach außen geschwenkt und kommen von den Rastkanten an dem Kontaktträgereinsatz frei.

Vorzugsweise sind an der Verschlußkappe Öffnungsabschnitte vorgesehen, welche bei Überführung der Verschlußkappe aus der Verriegelungsdrehstellung in die Einführungsdrehstellung die Rasthaken aus ihrer Raststellung herausheben. In diesen Falle sind also keine besonderen Maßnahmen erforderlich, um den Anschlußstecker gegenüber dem Kontaktträgereinsatz zu entrasten, wenn das Kabel abgezogen werden soll. Vielmehr erfolt die Entrastung der Verbindung zwischen Anschlußstecker und Kontaktträgereinsatz zwangsläufig durch Drehen der Verschlußkappe, welche ohnehin zur Demontage aus ihrer Verriegelungsstellung an dem Halteteil gedreht werden muß.

Die Öffnungsabschnitte können dabei beispielsweise mittels Auflaufschräge auf den jeweiligen Betätigungsabschnitt radial innen einwirken, so daß die Rasthaken in ihre Entrastungsstellung nach außen geschwenkt werden.

Eine noch weitere Verbesserung ergibt sich, wenn an der Verschlußkappe Sicherungsabschnitte vorgesehen sind, welche in Verriegelungsdrehstellung der Verschlußkappe ein Ausheben der Rasthaken aus ihrer Raststellung sperren. Dies kann beispielsweise dadurch geschehen, daß eine Bewegung der Betätigungsab schnitte nach radial innen und damit ein Ausschwenken der Rasthaken verhindert wird.

Die Abdichtung der erfindungsgemäßen Anschlußeinrichtung kann auch kabeleingangsseitig der Verschlußkappe sicher gewährleistet sein, wenn an die rückwärtige Kabeleinführungsöffnung der Verschlußkappe eine das Kabel dichtend umgreifende Tülle aus gummielastischem Material dichtend ansetzbar ist.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:

Fig. 1a in Seitenansicht mit Teilschnitt A-A von Fig. 1c eine die Erfindung aufweisenden Anschlußeinrichtung,

Fig. 1b in Seitenansicht Anschlußstecker und Verschlußkappe, letztere in Einführungsdrehstellung, unmittelbar vor dem Einführen in die Öffnung des Halteteils, an welchem die Anschlußeinrichtung vorgesehen werden soll,

Fig. 1c einen Teilschnitt B-B von Fig. 1a, wobei sich die Verschlußkappe in Verriegelungsdrehstellung befindet,

Fig. 1d einen Ausschnitt der Darstellung von Fig. 1c, wobei sich jedoch die Verschlußkappe in Einführungsdrehstellung befindet, und

Fig. 2a bis 2d Darstellungen entsprechend den Fig. 1a bis 1d für eine andere Ausgestaltung der Erfindung.

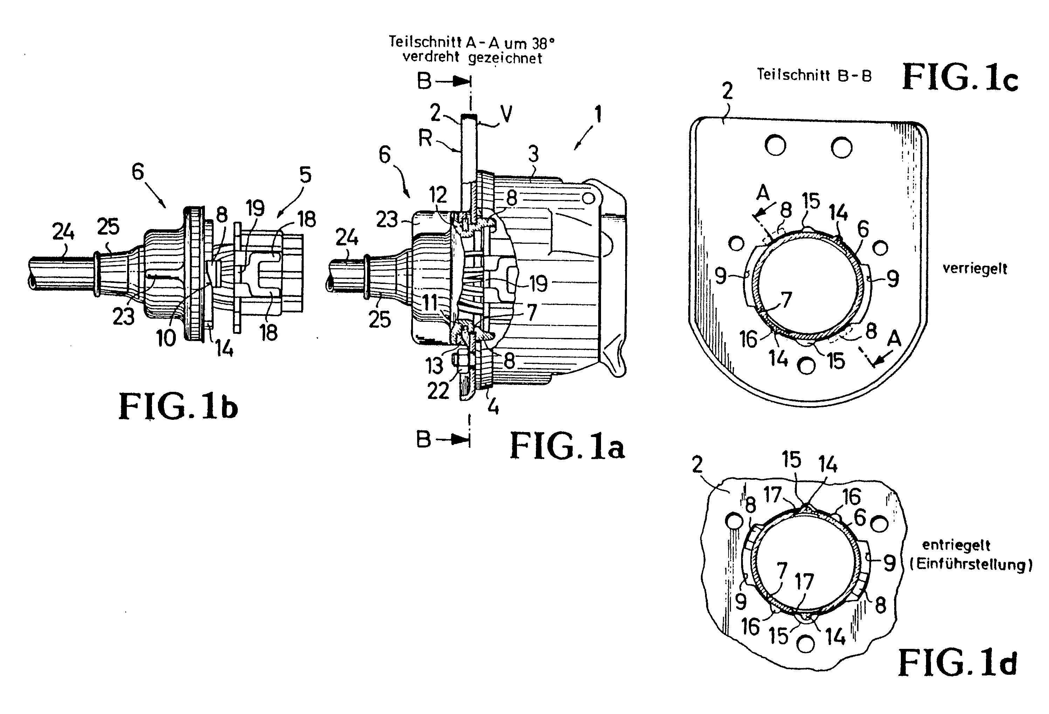

Gemäß Fig. 1a ist eine Steckdose 1 mittels Schraubbolzen 22 an einem Halteteil 2 befestigt.

Dabei stützt sich das Dosengehäuse 3 über einen Dichtring 4 auf der Vorderseite des Halteteils 2 ab. In dem Dosengehäuse 3 ist ein (nicht dargestellter) Kontaktträgereinsatz angeordnet, auf dessen rückwärtig herausragenden Kontakte z.B. Flachkontakte oder Rundkontakte für eine mehrpolige Steckverbindung ein Anschlußstecker 5 eines Kabels 24 aufsteckbar ist. Der Anschlußstecker 5 trägt auf seinen einander gegenüberliegenden Außenseiten je zwei Rasthaken 18, welche über einen verhältnismäßig dünnen Verbindungssteg mit der Außenseite des Anschlußsteckers 5 verbunden sind, so daß die Rasthaken 18 relativ zu der Außenwandung des Anschlußsteckers 5 schwenken können und beim Stecken des Anschlußsteckers 5 an den Kontaktträgereinsatz unter elastischem radialen Ausweichen hinter Rastkanten an dem Kontaktträgereinsatz einrasten. Dadurch erhält der Anschlußstecker 5 eine gegen Axialverschiebung gesicherte Position gegenüber dem Kontaktträgereinsatz. Die Rasthaken 18 gehen jenseits ihres Verbindungssteges mit der Wandung des Anschlußsteckers 5 öffnungsseitig in Betätigungsabschnitte 19 über. Wenn man auf die Betätigungsabschnitte von außen nach radial innen drückt, werden die Rasthaken 18 aus ihrer Rastposition an dem Kontaktträgereinsatz ausgehoben. Auf diese Weise läßt sich der Anschlußstecker 5 wieder von der Steckdose 1 abziehen.

Wie aus den Fig. 1a und 1b ersichtlich, sind die einzelnen Drähte des Kabel 24 mit den entsprechenden Kontakten des Anschlußsteckers 5 verbunden, welche ihrerseits zu den entsprechenden Kontakten in dem Kontaktträgereinsatz der Steckdose 1 passen. Hinter dem Anschlußstecker 5 befindet sich auf dem Kabelende zu diesem axial verschiebbar und drehbar eine Verschlußkappe 6. Die Verschlußkappe 6 ist mit einem Vorderabschnitt wie aus Fig. 1a ersichtlich, durch eine Öffnung 7 des Halteteils 2 hindurchführbar, durch welche auch der Anschlußstecker 5 zu dem Kontaktträgereinsatz der Steckdose hindurchgeführt wurde. An diesem vorderen Ende befinden sich Verriegelungssegmente 8 mit einer hinteren Auflaufschräge 10. Damit die Verriegelungssegmente 8 durch die Öffnung 1 einführbar sind, gleichzeitig aber eine Verriegelung gegenüber der Vorderseite V des Halteteils 2 gewährleisten können, wie aus Fig. 1c und 1d ersichtlich, sind am Rand der Öffnung 7 Segmentaussparungen 9 vorgesehen. Nach dem axialen Einführen des vorderen Endes der Verschlußkappe 6 in die Öffnung 1 wird die Verschlußkappe 6 relativ zu dem Halteteil 2, dem Anschlußstecker 5 und dem Kabel 4 verdreht, bis die Verriegelungssegmente 6 in die in Fig. 1c veranschaulichte Verriegelungsdrehstellung der Verschlußkappe 6 gelangen. Aufgrund der Auflaufschräge 10 wird die Verschlußkappe 6 an dem Halteteil 2 verspannt, wobei sich der Kappenkörper 12 über einen Dichtring 11 aus elastischem Material, wie z.B. Gummi oder Kunststoff, abstützt. Um die Drehung der Verschlußkappe 6 zu erleichtern, ist zwischen dem Dichtring 11 und dem Kappenkörper 12 jedenfalls bereichsweise ein Gleitring 13 angeordnet. Fig. 1a veranschaulicht, daß die Verschlußkappe 6 in ihrer Verriege lungsdrehstellung in der Lage ist, den Anschlußstecker 5 axial und radial relativ zu dem Kontaktträgereinsatz in dem Dosengehäuse 3 zu positionieren. Um das Drehen der Verschlußkappe 6 aus der Einführungsdrehstellung von Fig. 1b in die Verriegelungsdrehstellung von Fig. 1a zu erleichtern, sind am Außen umfang der Verschlußkappe 6 Betätigungsflügel 23 angeformt. Die rückwärtige Kabeldurchführungsöffnung der Verschlußkappe 6 ist mit einer Tülle 25 dicht verschlossen, welche andererseits auch das Kabel 24 dicht umschließt.

Aus den Fig. 1c und 1d ist ersichtlich, daß am Außenumfang des vorderen Abschnitts der Verschlußkappe 6 im Bereich des Halteteils 2 diametral einander gegenüberliegende Rastnocken 14 angeformt sind, und zwar in einem dünneren Wandungsbereich 17, so daß sie beim Drehen der Verschlußkappe 6 aus der in Fig. 1d dargestellten Einführungsdrehstellung, in welcher sich die Rastnocken 14 in Nockeneinführungsaussparungen 15 befinden, nach radial innen ausweichen können, bis sie in die in Fig. 1c dargestellte Verriegelungsdrehstellung gelangen, in welcher sie in Nockenrastaussparungen 16 am Rand der Öffnung 7 des Halteteils 2 einrasten. Hierdurch wird die Verriegelungsdrehstellung der Verschlußkappe 6 gesichert.

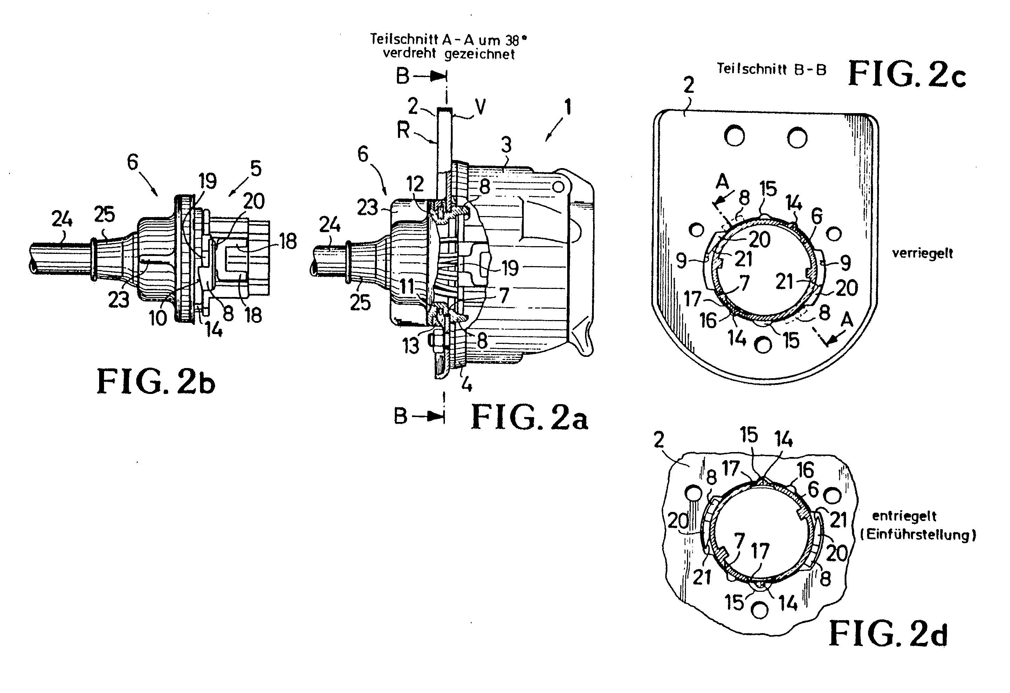

Die in den Fig. 2a bis 2d veranschaulichte Ausführungsform der erfindungsgemäßen Anschlußeinrichtung unterscheidet sich von derjenigen in den Fig. 1a bis 1d veranschaulichten dadurch, daß sich an die Verriegelungssegmente 8 jeweils ein Öffnungsabschnitt 20 anschließt, welcher bei der Überführung der Verschlußkappe 6 aus der Verriegelungsdrehstellung in die Einführungsdrehstellung mit einer inneren Auflaufschräge 21 die Betätigungsabschnitte 19 der Rasthaken 18 radial nach innen drückt, wodurch die Rasthaken 18 radial nach außen geschwenkt werden und sich von ihren Rastkanten an dem Kontaktträgerein satz lösen. Auf diese Weise wird der Anschlußstecker 5 mit dem Lösen der Verschlußkappe 6 zwangsläufig von dem Kontaktträger einsatz entriegelt, so daß Anschlußstecker 5 und Verschlußkappe 6 ohne weitere Handhabung gemeinsam von dem Halteteil 2 nach rückwärts abgezogen werden können.

Ähnlich ist es auch möglich, den Betätigungsabschnitt 19 in der Verriegelungsdrehstellung der Verschlußkappe 6 dadurch zu sichern und somit ein ungewolltes Entrasten des Anschlußsteckers 5 von dem Kontaktträgereinsatz zu verhindern, indem ein entsprechender (nicht dargestellter) als Nokkenfläche ausgebildeter Sicherungsabschnitt unter den Betätigungsabschnitt 19 gelangt, so daß dieser nicht nach radial innen schwenken kann.

Bezugzeichenliste:

1 Steckdose
2 Halteteil
3 Dosengehäuse
4 Dichtring
5 Anschlußstecker
6 Verschlußkappe
7 Öffnung
8 Verriegelungssegment
9 Segffentaussparungen
10 Auflaufschräge
11 Dichtring
12 Kappenkörper
13 Gleitring
14 Rastnocken
15 Nockeneinführungsaussparungen
16 Nockenrastaussparungen
17 Wandbereich
18 Rasthaken
19 Betätigungsabschnitte
20 Öffnungsabschnitte
21 Auflaufschräge
22 Schraubbolzen
23 Flügel
24 Kabel
25 Tülle
V Vorderseite
R Rückseite

**Ansprüche**

1. Einrichtung zum elektrischen Anschließen der Steckdose (1 einer mehrpoligen Steckvorrichtung, insbesondere für Kraftfahrzeuge, bei welcher die Steckdose (1) dichtend an der Vorderseite (V) eines Halteteils (2) anliegend an diesem befestigt und an einen in dem Dosengehäuse (3) aufgenommenen Kontaktträgereinsatz ein Anschlußstecker (5) ansteckbar ist, gekennzeichnet durch eine Verschlußkappe (6), welche dichtend an der Rückseite (R) des Halteteils (2) anliegend eine Öffnung (7) des Halteteils (2) von der Rückseite (R) aus durchgreift und mittels wenigstens eines Verriegelungssegments (8) relativ zu dem Halteteil (2) axial festlegbar ist.

2. Einrichtung nach Anspruch 1, dadurch gekennzeichnet, daß am Rand der Öffnung (7) des Halteteils (2) Segmentaussparungen (9) für das axiale Hindurchführen der Verriegelungssegmente (8) in Einführungsdrehstellung der Verschlußkappe (6) vorgesehen sind und daß die Verriegelungssegmente (8) durch Überführen dar Verschlußkappe (6) in ihre Verriegelungsdrehstellung mit dem Halteteil (2) verriegelbar sind.

3. Einrichtung nach Anspruch 1 oder 2, dadurch gekennzeichnet, daß die Verriegelungssegmente (8) Auflaufschrägen (10) zum Einwirken auf die Vorderseite (V) des Halteteils (2) beim Verriegeln aufweisen.

4. Einrichtung nach einem der Ansprüche 1 bis 3, dadurch gekennzeichnet, daß sich die Verschlußkappe (6) über einen Dichtring (11) aus elastisch nachgiebigem Material auf der Rückseite (R) des Halteteils (2) dichtend abstützt.

5. Einrichtung nach Anspruch 4, dadurch gekennzeichnet, daß zwischen Dichtring (11) und Kappenkörper (12) ein Gleitring (13) angeordnet ist.

6. Einrichtung nach einem der Ansprüche 1 bis 5, dadurch gekennzeichnet, daß die Verschlußkappe (6) an ihrem Umfang vorspringende Rastnocken (14) aufweist, welche in Einführungsdrehstellung der Verschlußkappe (6) in Nockeneinführungsaussparungen (15) am Rande der Öffnungen (7) des Halteteils (2) axial einführbar und durch Überführen der Verschlußkappe (6) in ihre Verriegelungsdrehstellung in Nockenrastaussparungen (16) am Rand der Öffnung (7) des Halteteils (2) einrastbar sind.

7. Einrichtung nach Anspruch 6, dadurch gekennzeichnet, daß die Rastnocken (14), die Nockeneinführungsaussparungen (15) und/oder die Nockenrastaussparungen (16) an ihren einander zugekehrten Flächen abgerundet sind.

8. Einrichtung nach Anspruch 6 oder 7, dadurch gekennzeichnet, daß die Rastnocken (14) an einem radial elastisch nachgiebigen Wandbereich (17) der Verschlußkappe (6) angeordnet sind.

9. Einrichtung nach einen der Ansprüche 6 bis 8, dadurch gekennzeichnet, daß die Nockeneinführungsaussparungen (15) größer sind als die Nockenrastaussparungen (16).

10. Einrichtung nach einem der Ansprüche 1 bis 9, dadurch gekennzeichnet, daß der Anschlußstecker (5) beim Anstecken an den Kontaktträgereinsatz mit diesem axialverrastbar ist.

11. Einrichtung nach Anspruch 10, dadurch gekennzeichnet, daß der Anschlußstecker (5) unter dem Ansteckdruck radial elastisch ausweichende Rasthaken (18) aufweist, welche bei vollständig an den Kontaktträgereinsatz angestecktem Anschlußstecker (5) Rastkanten des Kontaktträgereinsatzes hintergreifen.

12. Einrichtung nach Anspruch 11, dadurch gekennzeichnet, daß die Rasthaken (18) Betätigungsabschnitte (19) aufweisen, mit Hilfe welcher die Rasthaken (18) bei radialer Krafteinwirkung aus ihrer Raststellung aushebbar sind.

13. Einrichtung nach einem der Ansprüche 1 bis 12, dadurch gekennzeichnet, daß an der Verschlußkappe (6) Öffnungsabschnitte (20) vorgesehen sind, welche bei Überführung der Verschlußkappe (6) aus der Verriegelungsdrehstellung in die Einführungsdrehstellung die Rasthaken (18) aus ihrer Raststellung ausheben.

14. Einrichtung nach Anspruch 13, dadurch gekennzeichnet, daß die Öffnungsabschnitte (20) Auflaufschräge (21 ) zum Einwirken auf den jeweiligen Betätigungsabschnitt (19) bei Überführung der Verschlußkappe (6) aus der Verriegelungsdrehstellung in die Einführungsdrehstellung aufweisen.

15. Einrichtung nach einem der Ansprüche 1 bis 14, dadurch gekennzeichnet, daß an der Verschlußkappe (6) Sicherungsabschnitte vorgesehen sind, welche in Verriegelungsdrehstellung der Verschlußkappe (6) ein Ausheben der Rasthaken (18) aus ihrer Raststellung sperren.

16. Einrichtung nach einem der Ansprüche 1 bis 5, dadurch gekennzeichnet, daß an die rückwärtige Kabeleinführungsöffnung der Verschlußkappe (6) eine das Kabel (24) dichtend umgreifende Tülle (25) aus gummielastischem Material dichtend ansetzbar ist.

Teilschnitt A - A um 38°
verdreht gezeichnet

FIG. 1b

FIG. 1a

Teilschnitt B - B    FIG. 1c

verriegelt

entriegelt
(Einführstellung)

FIG. 1d

EP 0 425 758 A1

FIG.2c
Teilschnitt B-B
verriegelt

FIG.2d
entriegelt
(Einführstellung)

FIG.2a
Teilschnitt A-A um 38° verdreht gezeichnet

FIG.2b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 947 344 (AMP)<br>* Figuren 1-5; Seite 2, Zeile 19 - Seite 7, Zeile 3 *<br>--- | 1-3,6,7,9,10 | H 01 R 13/52<br>H 01 R 13/625<br>H 01 R 13/639 |
| A | US-A-4 707 047 (MICHAELS et al.)<br>* Figuren 1-10; Spalte 3, Zeile 64 - Spalte 6, Zeile 18 *<br>--- | 1,2,4,10 | |
| A | US-A-4 702 710 (DITTMAN et al.)<br>* Figuren 1-4; Spalte 2, Zeile 33 - Spalte 4, Zeile 10 *<br>--- | 1,2,6,7,9,10,16 | |
| A | DE-A-2 604 896 (AMP)<br>* Figuren 1-10; Seite 4, Zeile 4 - Seite 9, Zeile 4 *<br>----- | 1-4,6,7,9,10 | |

|  | RECHERCHIERTE SACHGEBIETE (Int. Cl.5) |
|---|---|
|  | H 01 R 13/00 |

Der vorliegende Recherchenbericht wurde für alle Patentansprüche erstellt

| Recherchenort | Abschlußdatum der Recherche | Prüfer |
|---|---|---|
| BERLIN | 11-01-1991 | HAHN G |